# EUROPÄISCHE PATENTSCHRIFT

(11) **EP 3 197 696 B1**
(45) Veröffentlichungstag und Bekanntmachung des Hinweises auf die Patenterteilung: **31.03.2021**
(21) Anmeldenummer: 15760170.9
(22) Anmeldetag: 07.09.2015
(51) Int. Cl.: B60H 1/00

(54) **VERFAHREN UND VORRICHTUNG ZUR EINSTELLUNG EINES THERMISCHEN KOMFORTZUSTANDES**
METHOD AND APPARATUS FOR SETTING A THERMAL COMFORT STATE
PROCÉDÉ ET DISPOSITIF DE RÉGLAGE D'UN ÉTAT DE CONFORT THERMIQUE

(30) Priorität: 25.09.2014 DE 102014219408
(43) Veröffentlichungstag der Anmeldung: 02.08.2017
(73) Patentinhaber: Volkswagen Aktiengesellschaft, 38440 Wolfsburg (DE)
(72) Erfinder: BADER, Viktor, 38448 Wolfsburg (DE); WÄLLER, Christoph, 38196 Braunschweig (DE)
(86) Internationale Anmeldenummer: PCT/EP2015/070365
(87) Internationale Veröffentlichungsnummer: WO 2016/045948

(56) Entgegenhaltungen:
- WO-A1-2008/084370
- DE-A1-102008 059 553
- US-A1- 2013 102 852
- US-A1- 2014 240 132

## Beschreibung

Die Erfindung betrifft ein Verfahren und eine Vorrichtung zur Einstellung eines thermischen Komfortzustandes mindestens eines Nutzers eines Fahrzeugs.

Aus der DE 196 48 038 A1 ist ein Verfahren zum Steuern einer Heiz- und/oder Klimaanlage, vorzugsweise von Fahrzeugen, bekannt. In dem Verfahren wird mittels einer Sensorik ein physiologischer Parameter eines Individuums bestimmt und die Anlage wird entsprechend diesem Parameter und nach Maßgabe eines entsprechenden Programms gesteuert. Bei der DE 196 48 038 A1 wird der Parameter optisch bestimmt. Als Parameter kommen beispielsweise die Hauttemperatur, die Hautfeuchtigkeit, die Pulsfrequenz und dergleichen in Frage. In der DE 196 48 038 A1 werden optische und elektrische Sensoren beschrieben, wobei diese Sensoren jedoch in jedem Fall im Fahrzeug angeordnet sind. Hierzu schlägt die Druckschrift vor, dass die Sensorik an den Stellen im Fahrzeug sitzt, die bei der Bedienung des Fahrzeugs beziehungsweise entsprechender Ausrüstungsbauteile angefasst werden.

Die Veröffentlichung K. Kaufmann "Neue Territorien der Vernetzung, 22.04.2013" (abrufbar unter http://www.haruki.de/2013/04/22/neue-territorien-der-vernetzung/) beschreibt sogenannte Smartwatches. In der Veröffentlichung wird beschrieben, dass Geräte über eine Smartwatch steuerbar sein können, beispielsweise eine Klimaanlage im Auto. In der Veröffentlichung werden jedoch keine Sensoren solcher Smartwatches beschrieben.

In der Veröffentlichung "Nissan Nismo: Smartwatch vermisst Auto und Mensch - golem.de" (abrufbar unter http://www.golem.de/news/nissan-nismo-smartwatch-vermisst-auto-und-mensch-1309-101546.html) wird ebenfalls eine Smartwatch beschrieben, die Leistungsdaten des Fahrers und Fahrzeuges empfangen und anzeigen kann. Hierin werden Sensoren der Smartwatch beschrieben. Allerdings wird in der Veröffentlichung nur beschrieben, dass medizinische Daten des Fahrers aufgezeichnet und diesem angezeigt werden. Die Verwendung der sensorisch erfassten Daten zur Einstellung eines thermischen Komfortzustandes ist nicht beschrieben.

Die WO 2008/084370 A1 offenbart eine Feedback-Regelmethode und eine Einheit zum Beeinflussen eines psychophysikalischen Zustands eines Nutzers.

Die US 2013/0102852 A1 offenbart ein Verfahren zum Regeln einer Einrichtung basierend auf physiologischen Messungen, die einem Nutzer zugeordnet sind.

Die DE 10 2008 059 553 A1 offenbart ein Verfahren zur Regelung einer Innenraumtemperatur in einem Fahrzeug.

Die US 2014/0240132 A1 offenbart einen Ansatz zur Bestimmung eines Verhaltenszustands eines Fahrzeugbetreibers.

Die DIN EN ISO 7730 und die DIN EN ISO 14505-2 beschreiben jeweils eine Zuordnung eines personenspezifischen Wärmeeintrags oder -abtrags zu einem thermischen Komfortzustand, insbesondere zu einem PMV-Index (predicted mean vote index). Die Zuordnung kann hierbei für den gesamten Körper oder für vorbestimmte Körperteile beschrieben werden.

Es stellt sich das technische Problem, ein Verfahren und eine Vorrichtung zur Einstellung eines thermischen Komfortzustandes mindestens eines Nutzers eines Fahrzeugs zu schaffen, die eine Einstellung eines gewünschten thermischen Komfortzustandes verbessern, insbesondere beschleunigen.

Die Lösung des technischen Problems ergibt sich durch Gegenstände mit den Merkmalen der unabhängigen Ansprüche 1 und 13. Weitere vorteilhafte Ausgestaltungen der Erfindung ergeben sich aus den Unteransprüchen.

Vorgeschlagen wird ein Verfahren zur Einstellung eines thermischen Komfortzustands mindestens eines Nutzers eines Fahrzeugs. Der Nutzer kann, wenn er sich im Fahrzeuginnenraum befindet, auch als Fahrzeuginsasse bezeichnet werden. Wie nachfolgend noch näher erläutert, kann der thermische Komfortzustand zum Beispiel über die Einstellung von Parametern einer Wärmezufuhr oder -abfuhr in/aus zumindest einem Teil des Fahrzeuginnenraums eingestellt werden. Parameter einer Wärmezufuhr oder -abfuhr können beispielsweise eine Temperatur und/oder eine Menge zu- oder abgeführter Luft sein. Somit kann das Verfahren zur Einstellung eines thermischen Komfortzustandes auch als Verfahren zur Einstellung von Parametern einer Wärmezufuhr oder -abfuhr in/aus zumindest einem Teil des Fahrzeuginnenraums bezeichnet werden. Selbstverständlich kann das Verfahren auch für die Einstellung von thermischen Komfortzuständen in verschiedenen Klimazonen des Fahrzeugs verwendet werden.

Wie nachfolgend ebenfalls noch näher erläutert, kann der thermische Komfortzustand durch mindestens eine im Fahrzeug angeordnete Einrichtung zur Veränderung einer Zustandsgröße des thermischen Komfortzustandes eingestellt werden. Derartige Zustandsgrößen werden nachfolgend näher erläutert. Eine solche Einrichtung kann beispielsweise eine Klimaanlage des Fahrzeugs, eine Heizanlage des Fahrzeugs oder eine Lüftungsanlage des Fahrzeuges sein. Somit kann das Verfahren zur Einstellung eines thermischen Komfortzustandes auch ein Verfahren zur Steuerung zumindest einer Einrichtung zur Veränderung einer Zustandsgröße des thermischen Komfortzustandes sein.

In dem Verfahren wird zu einem Anfangszeitpunkt mindestens eine Ist-Zustandsgröße des Nutzers durch eine Einrichtung zur Erfassung der mindestens einen Zustandsgröße erfasst. Die Zustandsgröße bezeichnet hierbei eine Größe, bei deren Änderung sich auch ein thermischer Komfortzustand des Nutzers ändert oder zumindest ändern kann. Der thermische Komfortzustand bezeichnet hierbei ein insbesondere subjektives Gefühl, welches eine Zufriedenheit mit einem Umgebungsklima ausdrückt.

Hierbei wird die mindestens eine Zustandsgröße von einer vom Nutzer getragenen Einrichtung erfasst. Dies bedeutet, dass die Einrichtung zur Erfassung nicht fahrzeugseitig sondern nutzerseitig angeordnet ist. Tragbar kann bedeuten, dass sich bei einer Veränderung der Position des Nutzers in einem globalen Koordinatensystem sich auch die Position der Einrichtung zur Erfassung in gleichem Maße ändert.

Vorzugsweise werden mehrere Ist-Zustandsgrößen erfasst. So wird/werden als Zustandsgröße(n) eine Hauttemperatur und/oder eine Hautfeuchte des Nutzers bestimmt. Die Ist-Zustandsgröße kann insbesondere von einem personenspezifischen Wärmeeintrag bzw. -abtrag abhängen oder mit diesem in Zusammenhang stehen. Die Einrichtung zur Erfassung kann bei insbesondere verschiedene Teileinrichtungen zur Erfassung der verschiedenen Zustandsgrößen aufweisen. Beispielsweise kann die Einrichtung zur Erfassung sowohl ein Hauttemperatursensor als auch ein Hautfeuchtesensor aufweisen oder umfassen. Selbstverständlich können jedoch auch mehrere Einrichtungen zur Erfassung verwendet werden, die jeweils voneinander verschiedene Zustandsgrößen erfassen.

Weiter wird in Abhängigkeit der mindestens einen Ist-Zustandsgröße ein Anfangs-Komfortzustand des Nutzers bestimmt. Der Anfangs-Komfortzustand bezeichnet somit einen thermischen Komfortzustand des Nutzers zum Anfangszeitpunkt. Hierbei ist erfindungsgemäß eine Zuordnung der mindestens einen Ist-Zustandsgröße zu einem thermischen Komfortzustand vorbekannt. Eine solche Zuordnung kann beispielsweise in Form eines funktionellen Zusammenhangs oder in Form einer sogenannten Lookup-Tabelle (Umsetzungstabelle) gegeben sein. Die vorbekannte Zuordnung kann beispielsweise im Rahmen von Vorversuchen ermittelt werden. Die Zuordnung kann hierbei eine generische Zuordnung, also eine für mehrere oder alle Nutzer gültige Zuordnung, oder eine nutzerspezifische Zuordnung, also nur für mindestens einen Nutzer gültige Zuordnung, sein.

Es wird die in der eingangs erläuterten DIN EN ISO 7730 oder in der DIN EN ISO 14505-2 beschriebene Zuordnung verwendet. Diese Publikationen beschreiben eine aufgrund von empirischen Untersuchungen gewonnene Zuordnung einer Ist-Zustandsgröße, insbesondere eines personenspezifischen Wärmeeintrags bzw. -abtrags, zu einem thermischen Komfortzustand, der insbesondere in Form eines Komfortindex, beispielsweise des PMV-Index, gegeben sein kann.

Der Komfortzustand wird erfindungsgemäß in Form des PMV-Index bestimmt.

Der Anfangszeitpunkt bezeichnet beispielsweise einen Zeitpunkt eines Einstiegs des Nutzers in das Fahrzeug. Ein solcher Zeitpunkt kann beispielsweise ermittelt werden, wenn der Nutzer eine Fahrzeugtür öffnet oder in einen vorbestimmten Umgebungsbereich um das Fahrzeug herum eintritt. Hierfür kann beispielsweise eine Entfernung zwischen Fahrzeug und Nutzer erfasst werden, beispielsweise über eine Kommunikation zwischen einer vom Nutzer getragenen Einrichtung, z.B. der vorhergehend erläuterten Einrichtung zur Erfassung, und einer fahrzeugseitig angeordneten Einrichtung. Auch der Zeitpunkt des Öffnens der Fahrzeugtür kann beispielsweise über geeignete Sensoren erfasst werden. Auch kann der Anfangszeitpunkt ein Zündungszeitpunkt sein, der beispielsweise den Zeitpunkt bezeichnet, zu dem die Zündung des Fahrzeugs eingeschaltet wird. Auch kann der Anfangszeitpunkt ein Zeitpunkt sein, zu dem ein Fahrzeugsitz des Fahrzeugs besetzt wird. Auch dieser Zeitpunkt kann beispielsweise durch geeignete Sensoren, insbesondere Kraftsensoren im Fahrzeugsitz, erfasst werden.

Weiter wird ein Ziel-Komfortzustand bestimmt. Der Ziel-Komfortzustand kann hierbei ein vorab vorgegebener generischer oder nutzerspezifischer Komfortzustand sein. Insbesondere kann der Ziel-Komfortzustand in Form eines Ziel-Komfortindex bestimmt werden.

Erfindungsgemäß wird in Abhängigkeit des Ziel-Komfortzustandes mindestens eine Ziel-Zustandsgröße bestimmt. Die mindestens eine Ziel-Zustandsgröße kann hierbei in Form des gleichen Parameters, beispielsweise einer Hauttemperatur, wie die zum Anfangszeitpunkt erfasste Ist-Zustandsgröße bestimmt. Hierfür wird wiederum der vorhergehend erläuterte vorbekannte Zuordnung zwischen einem Komfortzustand und der mindestens einen Zustandsgröße genutzt werden.

Weiter wird mindestens eine fahrzeugseitige Einrichtung zur Änderung der Zustandsgröße derart gesteuert, dass eine Abweichung der Ist-Zustandsgröße von der Ziel-Zustandsgröße minimiert wird. Die Einrichtung zur Veränderung der Zustandsgröße kann insbesondere eine Einrichtung zur Veränderung von Klimaparametern im Fahrzeuginnenraum sein. In diesem Fall kann die mindestens eine Zustandsgröße des Nutzers über die Klimaparameter im Fahrzeuginnenraum verändert werden. Insbesondere kann eine Einrichtung zur Veränderung einer Innenraumtemperatur und/oder eine Einrichtung zur Veränderung einer Luftzufuhr und -abfuhr des Fahrzeuginnenraums sein. Beispielsweise kann die Einrichtung zur Veränderung der Zustandsgröße eine Klimaanlage, eine Heizanlage oder eine Belüftungsanlage des Fahrzeugs sein. Die Einrichtung zur Veränderung der Zustandsgröße kann aber auch eine Einrichtung zur direkten Veränderung der Zustandsgröße des Nutzers sein, beispielsweise eine Infrarot-Strahleinrichtung.

Die Steuerung der fahrzeugseitigen Einrichtung zur Veränderung der Zustandsgröße und gegebenenfalls bereits die Bestimmung der Ziel-Zustandsgröße erfolgt, wenn der Ziel-Komfortzustand vom Anfangs-Komfortzustand abweicht, insbesondere um mehr als ein vorbestimmtes Maß.

Somit kann die Einrichtung zur Veränderung in Abhängigkeit der Abweichung derart gesteuert werden, dass die Abweichung minimiert wird. Insbesondere kann mindestens eine Eingangsgröße oder ein zeitlicher Verlauf einer Eingangsgröße (Stellgröße oder Führungsgröße) der Einrichtung zur Veränderung derart bestimmt werden, dass die Abweichung mit minimalem Zeitaufwand oder innerhalb eines vorbestimmten Zeitraums minimiert wird.

Hierdurch ergibt sich in vorteilhafter Weise, dass Zustandsgrößen zuverlässiger und zeitlich schneller erfasst werden können, da sich die entsprechende Einrichtung zur Erfassung in unmittelbarer Nähe des Nutzers befindet. Ebenfalls ergibt sich in vorteilhafter Weise, dass die Zustandsgröße nicht nur ausschließlich dann erfasst werden kann, wenn sich der Nutzer im Erfassungsbereich einer fahrzeugseitig angeordneten Einrichtung zur Erfassung befindet. Somit wird insbesondere ermöglicht, die Zustandsgröße bereits zeitlich vor dem Anfangszeitpunkt, beispielsweise dem Zeitpunkt des Einstiegs in das Fahrzeug, zu erfassen. Dies wiederum kann, wie nachfolgend noch näher erläutert, das Verfahren zur Einstellung des thermischen Komfortzustandes verbessern.

Die Einrichtung zur Erfassung kann hierbei beispielsweise mindestens eine Kommunikationseinrichtung zur Signal- und/oder Datenkommunikation mit einer Kommunikationseinrichtung des Fahrzeuges aufweisen. Die Einrichtung zur Erfassung kann beispielsweise die mindestens eine erfasste Zustandsgröße zum Fahrzeug übertragen. Auch ist es möglich, dass die Einrichtung zur Erfassung, insbesondere eine Auswerteeinrichtung dieser Einrichtung zur Erfassung, den Anfangs-Komfortzustand, den Ziel-Komfortzustand, die mindestens eine Ziel-Zustandsgröße und/oder Abweichung zwischen der Ist-Zustandsgröße und der Ziel-Zustandsgröße bestimmt und an das Fahrzeug überträgt. Somit können einzelne Verfahrensschritte entweder von der nutzerseitig angeordneten Einrichtung zur Erfassung oder fahrzeugseitig ausgeführt werden.

Wie nachfolgend noch näher erläutert, können auch Steuerprofile zur Steuerung der fahrzeugseitigen Einrichtung zur Veränderung der Zustandsgröße von der Einrichtung zur Erfassung bestimmt und an das Fahrzeug, insbesondere die fahrzeugseitige Einrichtung zur Änderung der Zustandsgröße, übertragen werden.

Die Einrichtung zur Erfassung kann weiter mindestens eine Speichereinrichtung aufweisen, wobei in der mindestens einen Speichereinrichtung insbesondere die vorhergehend erläuterte vorbekannte Zuordnung zwischen der mindestens einen Zustandsgröße und dem Komfortzustand gespeichert sein kann. Auch kann in der mindestens einen Speichereinrichtung mindestens ein Steuerprofil für die fahrzeugseitige Einrichtung zur Veränderung gespeichert sein.

Die Einrichtung zur Erfassung kann beispielsweise als portables Endgerät, beispielsweise als Mobilfunktelefon, als Brille oder als Gürtel ausgebildet oder in einen solchen Gegenstand integriert sein.

In einer bevorzugten Ausführungsform steht die Einrichtung zur Erfassung in Kontakt mit der Haut des Nutzers. Dies kann bedeuten, dass zumindest ein Teil der Einrichtung in mechanischem oder direktem Kontakt mit der Haut des Nutzers steht. Hierdurch ergibt sich in vorteilhafter Weise eine weitere Verbesserung der Zuverlässigkeit der Bestimmung der mindestens einen Zustandsgröße, insbesondere der Hauttemperatur und der Hautfeuchte.

In einer weiter bevorzugten Ausführungsform ist die Einrichtung zur Erfassung als Uhr ausgebildet oder in eine Uhr integriert. Hierdurch ergibt sich in vorteilhafter Weise, dass ein Alltagsgegenstand mit Hautkontakt zur Durchführung des Verfahrens genutzt werden kann, wodurch keine zusätzlichen Elemente vom Nutzer zu tragen sind.

In einer weiteren Ausführungsform wird die mindestens eine Ziel-Zustandsgröße in Abhängigkeit der mindestens einen Anfangs-Zustandsgröße bestimmt. Die Anfangs-Zustandsgröße kann der zum Anfangszeitpunkt bestimmten Ist-Zustandsgröße entsprechen. Hierbei kann mindestens zwei voneinander verschiedenen Anfangs-Zustandsgrößen jeweils eine von mindestens zwei voneinander verschiedenen Ziel-Zustandsgrößen zugeordnet sein. Mit anderen Worten kann die Ziel-Zustandsgröße abhängig von der Anfangs-Zustandsgröße sein.

Üblicherweise wird angenommen, dass genau eine vorbestimmte Ziel-Zustandsgröße eingestellt werden muss, um ein thermisches Wohlbefinden des Nutzers zu gewährleisten, wobei diese Zustandsgröße unabhängig von weiteren Parametern eingestellt wird. Überraschenderweise wurde jedoch festgestellt, dass ein thermisches Wohlbefinden einer Person auch von Bedingungen abhängt, die am Anfang einer Veränderung des Komfortzustandes vorlagen. Beispielsweise konnte festgestellt werden, dass der gleiche thermische Komfortzustand einer Person bei voneinander verschiedenen Ziel-Hauttemperaturen vorliegt, wobei die Ziel-Hauttemperatur davon abhängig sind, welche Anfangs-Hauttemperatur am Anfang der Veränderung der Hauttemperatur vorlag.

Beispielsweise kann als Ziel-Zustandsgröße eine Ziel-Zustandsgröße mit einem ersten Wert bestimmt werden, wenn die Anfangs-Zustandsgröße größer als ein oder gleich einem vorbestimmter/n Schwellwert ist. Hierbei kann also allen Anfangs-Zustandsgrößen aus einem ersten einseitig offenen Intervall, dessen minimaler Grenzwert der vorbestimmte Schwellwert ist, eine gemeinsame Ziel-Zustandsgröße zugeordnet sein.

Weiter kann als Ziel-Zustandsgröße eine Ziel-Zustandsgröße mit einem weiteren Wert bestimmt werden, wenn die mindestens eine Anfangs-Zustandsgröße kleiner als der vorbestimmte Schwellwert ist, wobei der erste Wert größer als der weitere Wert ist. Hierbei kann also allen Anfangs-Zustandsgrößen aus einem weiteren einseitig offenen Intervall, dessen maximaler Grenzwert der vorbestimmte Schwellwert ist, eine gemeinsame Ziel-Zustandsgröße zugeordnet sein.

Allerdings ist es auch möglich, dass jeder Anfangs-Zustandsgröße aus dem ersten und/oder weiteren Intervall jeweils eine anfangszustandsgrößenspezifische Ziel-Zustandsgröße zugeordnet ist.

Hierdurch kann die Einstellung des thermischen Komfortzustandes in vorteilhafter Weise an eine Trägheit eines subjektiven Komfortempfindens angepasst werden.

In einer weiteren Ausführungsform wird die mindestens eine Zustandsgröße zusätzlich zeitlich vor dem Anfangszeitpunkt erfasst. Beispielsweise kann ein zeitlicher Verlauf der Zustandsgröße, insbesondere mit einer zeitlichen Zuordnung, gespeichert werden kann. Z.B. kann die mindestens eine Zustandsgröße zu zumindest einem vorbestimmten Zeitpunkt, vorzugsweise zu mehreren vorbestimmten Zeitpunkten und/oder in einem vorbestimmten Zeitintervall vor dem Anfangszeitpunkt erfasst werden. Auch kann die Zustandsgröße kontinuierlich oder regelmäßig erfasst und gespeichert werden. In diesem Fall kann z. B. der zeitliche Verlauf der Zustandsgröße während eines Zeitraums mit vorbestimmter Dauer vor einem aktuellen Zeitpunkt gespeichert werden.

Weiter wird die mindestens eine Einrichtung zur Veränderung der Zustandsgröße zusätzlich in Abhängigkeit der zeitlich vor dem Anfangszeitpunkt erfassten Zustandsgröße gesteuert. Hierfür kann die gespeicherte Zustandsgröße von der Einrichtung zur Erfassung an das Fahrzeug übertragen werden. Alternativ kann aber auch ein von der zeitlich vor dem Anfangszeitpunkt erfassten Zustandsgröße abhängiges Steuerprofil einrichtungsseitig bestimmt und an das Fahrzeug übertragen werden.

Hierdurch kann beispielsweise detektiert werden, ob ein Nutzer vor dem Anfangszeitpunkt sich bereits für längere Zeit in einer kühlen Umgebung befand und somit ausgekühlt ist. In diesem Fall kann beispielsweise eine höhere Wärmezufuhr in den Fahrzeuginnenraum und/oder zum Nutzer notwendig sein als im Falle einer nur kurzen Abkühlung.

Selbstverständlich ist es auch möglich, bereits zeitlich vor dem Anfangszeitpunkt die mindestens eine Einrichtung zur Veränderung der Zustandsgröße oder einer Zusatzgröße, die nachfolgend noch näher erläutert wird, anzusteuern. Hierdurch kann beispielsweise eine Innenraumtemperatur des Fahrzeuges zeitlich vor dem Anfangszeitpunkt in Abhängigkeit der zeitlich vor dem Anfangszeitpunkt erfassten mindestens einen Zustandsgröße eingestellt werden. Hierdurch kann in vorteilhafter Weise eine Innenraumtemperatur an ein Komfortempfinden des Nutzers angepasst werden. Dies kann bedeuten, dass der Nutzer die Innenraumtemperatur beim Einstieg als nicht zu warm oder nicht zu kalt empfindet.

In einer weiteren Ausführungsform wird zusätzlich zu der mindestens einen Zustandsgröße zumindest eine Zusatzgröße bestimmt. Die Zusatzgröße kann eine physikalische Umgebungsgröße oder eine intermediäre Größe oder eine physiologische Größe des Nutzers sein, deren Veränderung ebenfalls die (subjektive) Zufriedenheit des Nutzers mit dem Umgebungsklima ändert oder ändern kann. Als physikalische Umgebungsgröße kann beispielsweise eine Intensität der Sonnenstrahlung, eine Lufttemperatur, eine Temperatur der Umschließungsfläche, eine relative Luftfeuchte, Parameter einer Luftbewegung, ein Luftdruck, eine Luftzusammensetzung, eine Luftelektrizität, ein akustischer Umgebungsparameter und/oder ein optischer Umgebungsparameter bestimmt werden. Eine Umschließungsfläche bezeichnet hierbei die eine Person umgebenden Flächen, insbesondere Oberflächen, die einen Raum zumindest teilweise umschließen, in dem sich die Person befindet, wobei die Umschließungsfläche Wärme abstrahlt oder absorbiert.

Als intermediäre Umgebungsgröße kann beispielsweise ein Bekleidungsgrad, ein Tätigkeitsgrad einer körperlichen Tätigkeit, eine Adaption und Akklimatisierung, eine tages- und/oder jahresrhythmusabhängige Einflussgröße und/oder eine Raum- oder Fahrzeugbesetzung durch weitere Personen bestimmt werden. Ein Bekleidungsgrad kann beispielsweise in Abhängigkeit eines zeitlichen Verlaufs einer Sitztemperatur eines Sitzes ermittelt werden, auf dem sich der Insasse befindet. Bei einem langsamen Anstieg der Sitztemperatur, z.B. bei einer Temperaturerhöhung, die in dem vorbestimmten Zeitraum kleiner als ein oder gleich einem vorbestimmten Temperaturschwellwert ist, kann z.B. auf einen hohen Isolationsgrad zwischen Fahrzeuginsasse und Sitzoberfläche und somit auf einen hohen Bekleidungsgrad geschlossen werden. Bei einem schnellen Anstieg der Sitztemperatur, z.B. bei einer Temperaturerhöhung, die in dem vorbestimmten Zeitraum größer als der vorbestimmte Temperaturschwellwert ist, kann z.B. auf einen niedrigen Isolationsgrad zwischen Fahrzeuginsasse und Sitzoberfläche und somit auf einen niedrigen Bekleidungsgrad geschlossen werden.

Ein Tätigkeitsgrad kann beispielsweise in Abhängigkeit einer Pulsfrequenz bestimmt werden, wobei z.B. bei einer hohen Pulsfrequenz, insbesondere einer Pulsfrequenz, die größer als ein oder gleich einem vorbestimmten Schwellwert ist, auf einen hohen Tätigkeitsgrad geschlossen werden kann. Entsprechend kann bei einer niedrigen Pulsfrequenz, insbesondere einer Pulsfrequenz, die kleiner als der vorbestimmte Schwellwert ist, auf einen niedrigen Tätigkeitsgrad geschlossen werden.

Ein Adaptions- und Akklimatisierungsgrad kann beispielsweise in Abhängigkeit einer Veränderungsgeschwindigkeit einer Zustandsgröße des Insassen, z.B. einer Hauttemperatur oder Hautfeuchte, bestimmt werden. Bei einer niedrigen Veränderungsgeschwindigkeit, z.B. bei einer Veränderung, die in einem vorbestimmten Zeitraum kleiner als ein oder gleich einem vorbestimmten Schwellwert ist, kann auf einen geringen Adaptions- und Akklimatisierungsgrad geschlossen werden. Bei einer hohen Veränderungsgeschwindigkeit, z.B. bei einer Veränderung, die in dem vorbestimmten Zeitraum größer als der vorbestimmte Schwellwert ist, kann auf einen hohen Adaptions- und Akklimatisierungsgrad geschlossen werden.

Ein Einfluss einer tages- und/oder jahresrhythmusabhängigen Einflussgröße kann, wie vorhergehend erläutert, ebenfalls in Abhängigkeit einer Veränderungsgeschwindigkeit mindestens einer Zustandsgröße bestimmt werden. Diese Einflussgröße kann hierbei insassenspezifisch bestimmt werden und vorbestimmten Tagszeitintervallen und/oder Jahreszeitintervallen zugeordnet werden. Nachfolgend können diese Informationen dann als Zusatzgröße genutzt werden.

Eine Raum- oder Fahrzeugbesetzung kann beispielsweise bildbasiert bestimmt werden, wobei ein Bild des Fahrzeuginnenraums ausgewertet wird, welches z.B. mittels einer Fahrzeugkamera erzeugt wird.

Als physiologische Größe können beispielsweise eine Nahrungsaufnahme, eine Ethnizität, ein Alter, ein Geschlecht, eine körperliche Verfassung und/oder eine Konstitution des Nutzers bestimmt werden.

Eine Nahrungsaufnahme kann beispielsweise zeit- und/oder ortsabhängig erfasst werden, z.B. wenn sich der Insasse an einer Position befindet, die z.B. in einer Datenbank als Position eines Restaurants abgespeichert ist.

Eine Ethnizität, ein Alter, ein Geschlecht und eine Konstitution des Nutzers können beispielsweise abgespeichert sein.

Eine körperliche Verfassung kann beispielsweise in Abhängigkeit mindestens einer Zustandsgröße bestimmt werden.

Die zumindest eine Zusatzgröße kann hierbei, entsprechend der mindestens einen Zustandsgröße, zeitlich vor dem Anfangszeitpunkt, zum Anfangszeitpunkt und/oder zeitlich nach dem Anfangszeitpunkt bestimmt werden. Die Zustandsgröße nach dem Anfangszeitpunkt kann beispielsweise geschätzt werden, z. B. modellbasiert.

Vorzugsweise wird zum Anfangszeitpunkt eine Innenraumtemperatur des Fahrzeugs und eine Strahlungsintensität von Sonnenstrahlung bestimmt. Weiter kann eine Strahlungsintensität der Sonnenstrahlung für zukünftige Zeitpunkte geschätzt werden. Weiter kann ein Tätigkeits- oder Aktivititätsgrad, beispielsweise in Abhängigkeit einer Pulsfrequenz und/oder eines Bewegungsmusters, erfasst werden.

Zur Erfassung der mindestens einen Zusatzgröße können hierbei erfassungseinrichtungsseitig und/oder fahrzeugseitig entsprechende Erfassungseinrichtungen zur Erfassung der Zusatzgröße bzw. Sensoren vorgesehen sein. Auch können Erfassungseinrichtungen verwendet werden, die als von der Erfassungseinrichtung zur Erfassung der Zustandsgröße verschiedene Erfassungseinrichtungen oder Sensoren ausgebildet sind. So kann beispielsweise die Pulsfrequenz mittels eines weiteren portablen Endgeräts, beispielsweise eines Mobilfunktelefons, erfasst werden. Selbstverständlich kann hierbei die Erfassungseinrichtung zur Erfassung der Zusatzgröße daten- und/oder signaltechnisch mit der Erfassungseinrichtung und/oder dem Fahrzeug kommunizieren.

Weiter wird die mindestens eine Einrichtung zur Veränderung der Zustandsgröße zusätzlich in Abhängigkeit der erfassten Zusatzgröße gesteuert. Hierdurch ergibt sich in vorteilhafter Weise eine weitere Verbesserung, insbesondere Beschleunigung, der Einstellung des thermischen Komfortzustandes auf einen gewünschten Ziel-Zustand. Beispielsweise kann bei einer hohen Strahlungsintensität der Sonnenstrahlung eine Heizleistung einer Heiz- oder Klimaanlage reduziert werden.

In einer weiteren Ausführungsform ist einer Anzahl von Zustandsprofilen jeweils ein Steuerprofil zur Steuerung der mindestens einen Einrichtung zur Veränderung der Zustandsgröße zugeordnet. Dies kann insbesondere in Form einer Lookup-Tabelle (Umsetzungstabelle) gegeben sein. Die Zuordnung des Zustandsprofils zu dem jeweiligen Steuerprofil ist hierbei vorbekannt. Das Steuerprofil ist hierbei insbesondere ein Steuerprofil zum Einstellen der mindestens einen Ziel-Zustandsgröße, die in Abhängigkeit des Ziel-Komfortzustands bestimmt wird. Somit kann das Steuerprofil abhängig von dem Ziel-Komfortzustand sein bzw. diesem zugeordnet sein. Der Anfangskomfortzustand kann abhängig von dem Zustandsprofil bestimmt werden. Somit kann einem Zustandsprofil ein Komfortzustand zugeordnet sein.

Das Zustandsprofil umfasst hierbei zumindest die mindestens eine Zustandsgröße zum Anfangszeitpunkt. Vorzugsweise kann jedoch das Zustandsprofil zusätzlich mindestens eine weitere Zustandsgröße, eine von dem zeitlichen Verlauf der mindestens einen Zustandsgröße vor dem Anfangszeitpunkt abhängige Größe, eine von einem geschätzten zeitlichen Verlauf der mindestens einen Zustandsgröße nach dem Anfangszeitpunkt abhängige Größe, mindestens eine Zusatzgröße und/oder mindestens eine von dem zeitlichen Verlauf der mindestens einen Zusatzgröße vor dem Anfangszeitpunkt abhängige Größe und/oder eine von einem geschätzten zeitlichen Verlauf der mindestens einen Zusatzgröße nach dem Anfangszeitpunkt abhängige Größe umfassen.

Ein Steuerprofil kann beispielsweise mindestens eine Eingangsgröße, insbesondere einen zeitlichen Verlauf der Eingangsgröße, der mindestens einen Einrichtung zur Veränderung der Zustandsgröße umfassen oder enthalten. Beispielsweise kann das Steuerprofil z. B. einen zeitlichen Verlauf einer Eingangsspannung oder eines Eingangsstromes für eine elektrische Heizanlage des Fahrzeuges umfassen oder enthalten.

Hierbei kann die Zuordnung des Zustandsprofils zu dem jeweiligen Steuerprofil eine nutzerspezifische und/oder fahrzeugspezifische Zuordnung sein. Dies kann bedeuten, dass einem Zustandsprofil ein nutzerspezifisches und/oder fahrzeugspezifisches Steuerprofil zugeordnet sein kann. Selbstverständlich kann jedoch die Zuordnung des Zustandsprofils zu dem jeweiligen Steuerprofil zumindest teilweise generisch, z.B. nutzer- aber nicht fahrzeugspezifisch oder fahrzeug- aber nicht nutzerspezifisch, sein.

Die Zuordnung von Zustandsprofilen zu Steuerprofilen kann hierbei insbesondere durch Vorversuche ermittelt werden. Wie nachfolgend noch näher erläutert, kann diese Zuordnung auch im Rahmen eines selbstlernenden Systems angepasst und/oder erweitert werden.

Zum Anfangszeitpunkt wird das Steuerprofil zur Steuerung der mindestens einen Einrichtung zur Veränderung der Zustandsgröße gewählt, dessen Zustandsprofil eine minimale Abweichung von dem zum Anfangszeitpunkt vorliegenden Zustandsprofil aufweist.

Hierdurch ergibt sich in vorteilhafter Weise eine besonders einfache Steuerung der mindestens einen Einrichtung zur Veränderung der mindestens einen Zustandsgröße.

In einer weiteren Ausführungsform wird ein Zustandsprofil zum Anfangszeitpunkt bestimmt, wobei weiter ein zeitlicher Verlauf der mindestens einen Zustandsgröße nach dem Anfangszeitpunkt erfasst wird. Selbstverständlich kann auch ein zeitlicher Verlauf der vorhergehend erläuterten weiteren Größen des Zustandsprofils erfasst werden.

Weiter wird in Abhängigkeit des zeitlichen Verlaufs ein Steuerprofil zur Steuerung der mindestens einen Einrichtung zur Veränderung der Zustandsgröße bestimmt und dem Zustandsprofil zugeordnet. Insbesondere kann ein existierendes Steuerprofil, welches dem Zustandsprofil zugeordnet ist, verändert werden, wobei dann das veränderte Steuerprofil dem Zustandsprofil zugeordnet wird. Das Steuerprofil kann insbesondere derart bestimmt werden, dass eine Zeitdauer zum Erreichen der mindestens einen Zielgröße verringert oder sogar minimiert wird. Beispielsweise kann die Zeitdauer erfasst werden, die mit einem bisherigen Steuerprofil benötigt wird, um die mindestens eine Zielgröße zu erreichen. Hiernach kann das Steuerprofil derart angepasst werden, dass sich diese Zeitdauer verringert. Beispielsweise kann mindestens eine Eingangsgröße des Steuerprofils für eine nachfolgende Steuerung um ein vorbestimmtes Maß verändert werden, insbesondere jedoch nicht mehr als ein vorbestimmtes Maximalmaß. Beispielsweise kann ein Eingangsstrom für eine Heizeinrichtung erhöht werden, wenn ein Anstieg des Komfortindex nur langsam erfolgte. Bei einer nachfolgenden Aktivierung des Steuerprofils kann dann bestimmt werden, ob eine schnellere Veränderung hin zu einem Ziel-Komfortzustand erfolgt. Somit kann eine iterative Anpassung des Steuerprofils erfolgen. Weiter können zusätzlich manuelle Eingriffe in das Steuerprofil beispielsweise in eine Eingangsgröße, insbesondere einen zeitlichen Verlauf der Eingangsgröße, nach dem Anfangszeitpunkt erfasst werden. Diese manuellen Eingriffe können hierbei als Nutzerwunsch interpretiert werden. Ein bestehendes Steuerprofil kann hierbei derart verändert werden, dass die Veränderung durch dem manuellen Eingriff in das Steuerprofil integriert wird. Hierdurch kann ein selbstlernendes System geschaffen werden.

Insbesondere kann somit in vorteilhafter Weise ein nutzerspezifisches Steuerprofil erstellt werden. So ist es vorstellbar, dass in einem Initialzustand ein oder mehrere standardisierte Standard-Steuerprofile vorhanden sind. Diese können dann, wie vorhergehend erläutert, nutzerspezifisch angepasst werden.

Selbstverständlich kann die Anpassung des Steuerprofils in Abhängigkeit von manuellen Eingriffen auch erst dann erfolgen, wenn ein manueller Eingriff wiederholt, beispielsweise mindestens dreimal, erfolgt.

Weiter kann selbstverständlich auch eine manuelle Änderung der mindestens einen Zielgröße erfolgen. Hierbei kann beispielsweise der Nutzer die Zielgröße, beispielsweise die Hauttemperatur, korrigieren. In diesem Fall kann diese veränderte Zielgröße dem Zustandsprofil zum Anfangszeitpunkt zugeordnet werden und ein Steuerprofil derart bestimmt, insbesondere derart verändert, werden, dass die veränderte Zielgröße, insbesondere nach einer vorbestimmten Zeitdauer, eingestellt wird. Selbstverständlich kann die Veränderung der Zielgröße auch erst dann vorgenommen werden, falls die Veränderung der Zielgröße durch den Nutzer mehrfach, beispielsweise mehr als dreimal, erfolgt ist.

In einer bevorzugten Ausführungsform sind oder werden die Steuerprofile einem Nutzer zugeordnet. Hierbei kann eine Identifikation des Nutzers erfolgen, beispielsweise in Abhängigkeit einer nutzerspezifischen Kennung und/oder in Abhängigkeit nutzerspezifischer Parameter. Die Kennung und/oder die nutzerspezifischen Parameter können beispielsweise von der Einrichtung zur Erfassung der Zustandsgröße oder einer weitere Einrichtung zur Erfassung erfasst werden.

Somit ist es auch möglich, dass die tragbare Einrichtung zur Erfassung von weiteren Nutzern verwendet werden kann, wobei somit auch weitere nutzerspezifische Steuerprofile verwendet werden können. Sind für einen Nutzer noch keine spezifischen Steuerprofile vorhanden, so können die vorhergehend erläuterten Standard-Steuerprofile oder Steuerprofile eines ähnlichen Nutzers verwendet und angepasst werden. Ein ähnlicher Nutzer kann beispielsweise in Abhängigkeit von Alter, Geschlecht, Tages- und Jahresrhythmus bestimmt werden.

In einer weiteren Ausführungsform sind die Steuerprofile in mindestens einer Speichereinrichtung des Fahrzeugs oder in mindestens einer Speichereinrichtung der Einrichtung zur Erfassung der mindestens einen Zustandsgröße gespeichert. Sind die Steuerprofile in mindestens einer Speichereinrichtung der Einrichtung zur Erfassung gespeichert, so kann die Einrichtung zur Erfassung in vorteilhafter Weise zur Steuerung von Einrichtungen zur Veränderung von mehreren Fahrzeugen verwendet werden.

Wird z.B. ein Steuerprofil von der Einrichtung zur Erfassung bestimmt und an das Fahrzeug übertragen, so kann das Steuerprofil in einer für mehrere Fahrzeuge normierten Form zum Fahrzeug übertragen werden, wobei eine fahrzeugspezifische Anpassung, insbesondere Umrechnung, der übertragenen Steuerprofile erfolgt, um die fahrzeugseitige Einrichtung zur Veränderung anzusteuern.

In einer weiteren Ausführungsform wird in Abhängigkeit der Abweichung der Ist-Zustandsgröße von der Ziel-Zustandsgröße ein Energieverbrauch zum Erreichen der Ziel-Zustandsgröße bestimmt. Beispielsweise kann ein Verbrauch von elektrischer Energie zum Betrieb einer elektrischen Heizanlage bestimmt werden. In Abhängigkeit des derart bestimmten Energieverbrauchs kann, insbesondere bei Elektrofahrzeugen, eine Reichweitenprognose aktualisiert werden.

Hierdurch ergibt sich in vorteilhafter Weise ein verbesserter Betrieb des Fahrzeugs.

In einer bevorzugten Ausführungsform werden als Zustandsgrößen zumindest eine Hauttemperatur und eine Hautfeuchte bestimmt. Hierdurch ergibt sich in vorteilhafter Weise eine besonders zuverlässige Einstellung eines gewünschten thermischen Komfortzustands.

Das Verfahren kann auch für mehr als einen Nutzer oder Fahrzeuginsassen durchgeführt werden. Hierbei kann z.B. ein Fahrzeuginnenraum in mehrere räumliche Bereiche, die auch als Komfortzonen bezeichnet werden können, unterteilt sein, wobei das Verfahren für jeden Bereich und für den Nutzer durchgeführt wird, der den entsprechenden Bereich belegt.

Alternativ kann das Verfahren für einen ausgewählten der mehreren Nutzer durchgeführt werden. So ist es z.B. vorstellbar, dass das Verfahren bei mehreren Nutzern für den Fahrzeugführer durchgeführt wird. Auch ist vorstellbar, dass das Verfahren für einen Mitfahrer oder Beifahrer durchgeführt wird, insbesondere in einer Chauffeur-Situation. Auch ist es vorstellbar, dass das Verfahren für den zuletzt in das Fahrzeug zugestiegenen Nutzer durchgeführt wird.

Selbstverständlich ist es auch vorstellbar, für jeden Nutzer ein nutzerspezifische Steuerprofil zu bestimmen, wobei dann in Abhängigkeit aller nutzerspezifischer Steuerprofile ein fusioniertes, beispielsweise ein gemitteltes oder mit Gewichtung gemitteltes, Steuerprofil bestimmt und zur Steuerung der mindestens einen Einrichtung zur Veränderung der Zustandsgröße genutzt wird.

Weiter vorgeschlagen wird eine Vorrichtung zur Einstellung eines thermischen Komfortzustands mindestens eines Nutzers eines Fahrzeugs. Die Vorrichtung kann hierbei auch als System bezeichnet werden. Die Vorrichtung umfasst mindestens eine Einrichtung zur Erfassung mindestens einer Zustandsgröße und mindestens eine Auswerteeinrichtung. Die Auswerteeinrichtung kann hierbei erfassungseinrichtungsseitig und/oder fahrzeugseitig angeordnet sein. Auch kann die Auswerteeinrichtung eine Gesamtheit von Auswerteeinrichtungen umfassen, wobei Teile der Gesamtheit erfassungseinrichtungsseitig und verbleibende Teile der Gesamtheit fahrzeugseitig angeordnet sind.

Zu einem Anfangszeitpunkt ist mindestens eine Ist-Zustandsgröße des Nutzers durch die Einrichtung zur Erfassung der mindestens einen Zustandsgröße erfassbar. Weiter ist durch die Auswerteeinrichtung in Abhängigkeit der mindestens einen Ist-Zustandsgröße ein Anfangs-Komfortzustand des Nutzers bestimmbar. Weiter ist ein Ziel-Komfortzustand und in Abhängigkeit des Ziel-Komfortzustands mindestens eine Ziel-Zustandsgröße bestimmbar. Weiter ist, z. B. durch eine Steuereinrichtung, die ebenfalls Teil der vorgeschlagenen Vorrichtung sein kann, mindestens eine fahrzeugseitige Einrichtung zur Veränderung der Zustandsgröße, die ebenfalls Teil der vorgeschlagenen Vorrichtung sein kann, derart steuerbar, dass eine Abweichung der Ist-Zustandsgröße von der Ziel-Zustandsgröße minimiert wird, wenn der Ziel-Komfortzustand vom Anfangs-Komfortzustand abweicht. Z. B. kann durch die Auswerteeinrichtung oder eine weitere Auswerteeinrichtung mindestens eine Eingangsgröße für eine Einrichtung zur Veränderung der Zustandsgröße derart bestimmbar sein, dass eine Abweichung der Ist-Zustandsgröße von der Ziel-Zustandsgröße minimiert wird.

Hierbei ist die Einrichtung zur Erfassung der mindestens einen Zustandsgröße als eine vom Nutzer tragbare Einrichtung ausgebildet. Insbesondere kann die Einrichtung zur

Erfassung als mobiles Endgerät, vorzugsweise als Uhr, ausgebildet sein oder in ein solches Gerät integriert sein.

Die vorhergehend erläuterte Steuereinrichtung und/oder weitere Auswerteeinrichtung kann hierbei ebenfalls fahrzeugseitig oder erfassungseinrichtungsseitig angeordnet sein.

Weiter kann die Vorrichtung selbstverständlich die vorhergehend erläuterte Speichereinrichtung, Kommunikationseinrichtung sowie die Einrichtung zur Veränderung der Zustandsgröße umfassen. Somit kann die vorgeschlagene Vorrichtung im oder am Fahrzeug angeordnete Einrichtungen als auch vom Fahrzeug baulich getrennt ausgebildete Einrichtungen umfassen.

Die Vorrichtung ist insbesondere derart ausgebildet, dass ein Verfahren gemäß einer der vorhergehend erläuterten Ausführungsformen mittels der Vorrichtung durchführbar ist.

Die Erfindung wird anhand eines Ausführungsbeispiels näher erläutert. Die Figuren zeigen:
- Fig. 1: ein schematisches Blockschaltbild einer erfindungsgemäßen Vorrichtung,
- Fig. 2: ein schematisches Flussdiagramm eines erfindungsgemäßen Verfahrens,
- Fig. 3: ein schematisches Flussdiagramm einer Bestimmung von Steuerprofilen,
- Fig. 4: eine exemplarische Zuordnung von Anfangs-Hauttemperaturen zu Ziel-Hauttemperaturen und
- Fig. 5: ein exemplarischer Zusammenhang einer Wärmezufuhr/-abfuhr nach einem Anfangszeitpunkt und Komfortzuständen vor dem Anfangszeitpunkt

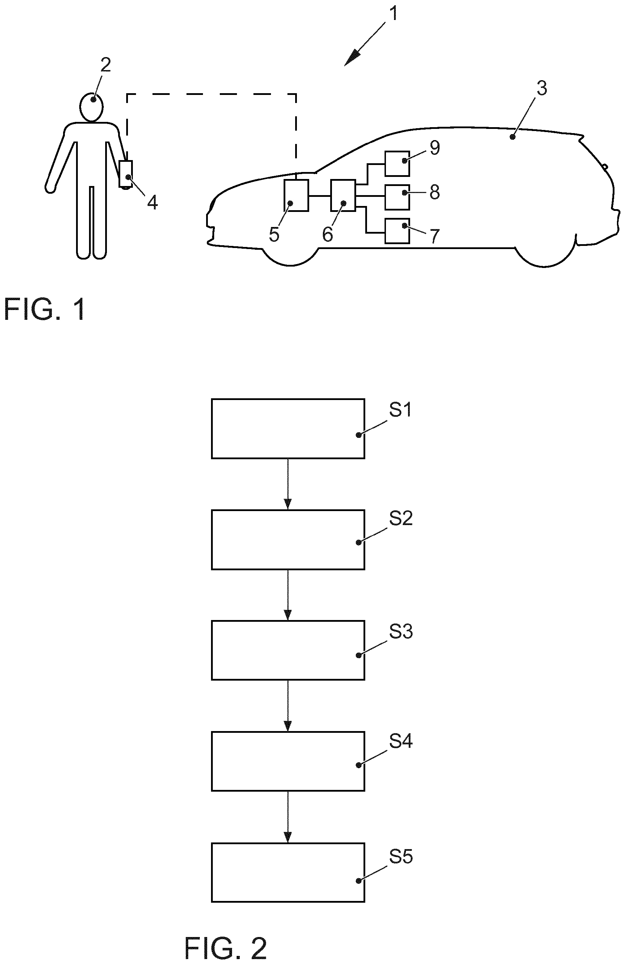

In Fig. 1 ist ein schematisches Blockschaltbild einer erfindungsgemäßen Vorrichtung 1 zur Einstellung eines thermischen Komfortzustands eines Nutzers 2 eines Fahrzeuges 3 dargestellt. Die Vorrichtung 1 umfasst eine Einrichtung 4 zur Erfassung einer Hauttemperatur HT und einer Hautfeuchte des Nutzers 2, wobei Einrichtung 4 als Uhr ausgebildet ist oder in eine Uhr integriert ist. In Fig. 1 ist nicht dargestellt, dass die Einrichtung 4 zur Erfassung zusätzlich eine Kommunikationseinrichtung zur Daten- und/oder Signalkommunikation mit dem Fahrzeug 3 sowie eine Auswerteeinrichtung und mindestens eine Speichereinrichtung umfasst.

Das Fahrzeug 3 umfasst eine Kommunikationseinrichtung 5, über die eine Daten- und/oder Signalkommunikation mit der Einrichtung 4 zur Erfassung durchführbar ist. Weiter umfasst das Fahrzeug 3 eine Steuereinrichtung 6. Mittels der Steuereinrichtung 6 kann ein Betrieb einer Klimaanlage 7, einer Belüftungsanlage 8 und einer Infrarotstrahleinrichtung 9 im Fahrzeug 3 gesteuert werden. Über die Klimaanlage 7 kann eine Innentemperatur des Fahrzeugs 3 eingestellt werden. Über die Belüftungsanlage 8 kann eine Luftzufuhr/-abfuhr in/aus dem Fahrzeuginnenraum eingestellt werden. Über die Infrarotstrahleinrichtung 9 kann ein im Fahrzeuginnenraum befindlicher Nutzers 2, also ein Fahrzeuginsasse, mit Infrarotstrahlung bestrahlt werden, wodurch thermische Energie zum Nutzer 2 übertragen werden kann.

Anhand des in Fig. 2 dargestellten exemplarischen Flussdiagramms wird das erfindungsgemäße Verfahren näher erläutert.

Hierbei erfolgt in einem ersten Schritt S1 eine nutzerbezogene Erfassung mindestens einer Zustandsgröße, insbesondere der Hauttemperatur HT und Hautfeuchte. Diese Erfassung kann kontinuierlich erfolgen. Weiter kann die mindestens eine derart erfasste Zustandsgröße gespeichert werden. Beispielsweise kann ein zeitlicher Verlauf der Zustandsgröße für ein vorbestimmtes Zeitintervall, beispielsweise die letzten 30 Minuten, vor einem aktuellen Zeitpunkt gespeichert werden.

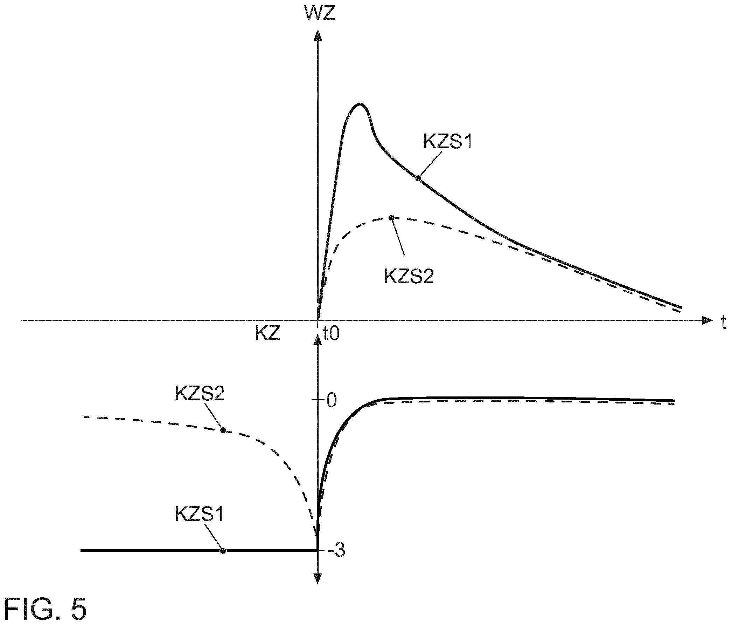

In einem zweiten Verfahrensschritt S2 wird zu einem Anfangszeitpunkt t0 (siehe Fig. 5) eine Innenraumtemperatur des Fahrzeugs 3 (siehe Fig. 1) bestimmt. Hierfür kann das Fahrzeug 3 einen nicht in Fig. 1 dargestellten Temperatursensor umfassen. Die Innenraumtemperatur kann dann an die Einrichtung 4 zur Erfassung übertragen werden. Weiter wird im zweiten Schritt S2 zum Anfangszeitpunkt t0 die aktuelle Hauttemperatur HT und Hautfeuchte erfasst. Weiter kann im zweiten Schritt S2 zum Anfangszeitpunkt t0 eine Strahlungsintensität von Sonnenstrahlung bestimmt werden. Auch die Strahlungsintensität kann fahrzeugseitig erfasst und an die Einrichtung 4 übertragen werden. Allerdings kann auch die Hauttemperatur HT und Hautfeuchte an das Fahrzeug 3 übertragen werden.

Die Innenraumtemperatur, die aktuelle Hauttemperatur HT, die aktuelle Hautfeuchte, die Intensität der Sonnenstrahlung und der gespeicherte zeitliche Verlauf der Hauttemperatur HT und der Hautfeuchte (oder eine davon abhängige Größe) werden in Form eines Zustandsprofils zusammengefasst, beispielsweise als Zustandsvektor. Diese Erstellung des Zustandsvektors kann hierbei erfassungseinrichtungsseitig, beispielsweise durch die Auswerteeinrichtung der Einrichtung 4 zur Erfassung, oder fahrzeugseitig, beispielsweise durch die Steuereinrichtung 6, erfolgen. Hierfür können alle zur Bestimmung notwendigen Größen an die entsprechende Einrichtung daten- und/oder signaltechnisch übertragen werden. Ein Anfangs-Komfortzustand kann in Abhängigkeit des erzeugten Zustandsprofils bestimmt werden.

In einem dritten Schritt S3 erfolgt ein Vergleich des derart erzeugten Zustandsprofils mit vorhandenen und gespeicherten Zustandsprofilen, wobei jedem vorhandenen Zustandsprofil ein Steuerprofil zur Steuerung der Klimaanlage 7, der Belüftungsanlage 8 und der Infrarot-Strahleinrichtung 9 in Form einer Lookup-Tabelle zum Erreichen eines Ziel-Komfortzustandes bzw. der vom Ziel-Komfortzustand abhängigen Ziel-Zustandsgröße zugeordnet ist. Ein Steuerprofil bezeichnet hierbei einen zeitlichen Verlauf einer Eingangsgröße, beispielsweise einer Eingangsspannung, der Klimaanlage 7, der Belüftungsanlage 8 und der Infrarot-Strahleinrichtung 9. Die vorhandenen Zustandsprofile sowie die diesen zugeordneten Steuerprofile können hierbei einrichtungsseitig oder fahrzeugseitig gespeichert sein.

Weiter wird im dritten Schritt S3 das vorhandene Zustandsprofil ausgewählt, welches die geringste Abweichung zu dem erstellten Zustandsprofil aufweist. Beispielsweise kann ein Vektorabstand zwischen den in Form von Zustandsvektoren gegebenen Zustandsprofilen bestimmt werden, wobei die geringste Abweichung beim geringsten Vektorabstand gegeben ist.

In einem vierten Schritt S4 wird dann das entsprechende Steuerprofil zur Steuerung der Klimaanlage 7, der Belüftungsanlage 8 und der Infrarot-Strahleinrichtung 9 verwendet. Der Vergleich im dritten Schritt S3 und der vierte Schritt S4 wird nur durchgeführt, wenn der Ziel-Komfortzustand vom Anfangs-Komfortzustand abweicht.

In einem fünften Schritt S5 können manuelle Veränderungen der Eingangsgrößen der Klimaanlage 7, der Belüftungsanlage 8 und der Infrarot-Strahleinrichtung 9 erfasst werden. In Abhängigkeit dieser manuellen Änderungen kann das gewählte Steuerprofil verändert werden, wodurch ein selbstlernendes System bereitgestellt wird. Dieses geänderte Steuerprofil kann dann für den Nutzer 2 bei zeitlich nachfolgenden Steuerverfahren verwendet werden. Das geänderte Steuerprofil kann selbstverständlich dem anfangs bestimmten Zustandsprofil zugeordnet werden.

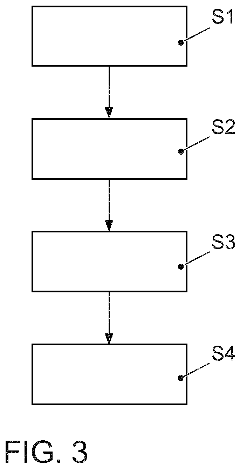

In Fig. 3 ist ein schematisches Flussdiagramm zum Erstellen eines Steuerprofils dargestellt. In einem ersten Schritt S1 werden, wie in Fig. 2 bereits beschrieben, die mindestens eine Zustandsgröße erfasst, beispielsweise mittels der in Fig. 1 dargestellten Einrichtung 4 zur Erfassung. Zusätzlich werden im ersten Schritt weitere Zusatzgrößen, insbesondere eine Außentemperatur, eine Luftfeuchte, eine Intensität der Sonnenstrahlung, eine Tageszeit sowie ein Aktivitätsgrad des Nutzers erfasst. In Abhängigkeit der Tageszeit kann ein aktueller Zustand eines Biorhythmus des Nutzers bestimmt werden. Der Aktivitätsgrad kann beispielsweise in Abhängigkeit einer Pulsfrequenz und/oder eines Bewegungsmusters des Nutzers bestimmt werden. Eine, mehrere oder alle der vorgenannten Zusatzgrößen können hierbei ebenfalls durch die Einrichtung 4 zur Erfassung erfasst werden. Selbstverständlich können eine, mehrere oder alle Zusatzgrößen auch von weiteren Einrichtungen zur Erfassung (nicht dargestellt), beispielsweise durch ein Mobiltelefon, erfasst werden.

In einem zweiten Schritt S2 wird zu einem Anfangszeitpunkt eine Innenraumtemperatur des Fahrzeugs 3 (siehe Fig. 1) bestimmt.

In einem dritten Schritt S3 wird, wie bereits im Zusammenhang mit Fig. 2 erläutert, ein Steuerprofil ausgewählt und zur Steuerung der Klimaanlage 7, der Belüftungsanlage 8 und der Infrarot-Strahleinrichtung 9 (siehe Fig. 1) verwendet. Gleichzeitig erfolgt im dritten Schritt S3 eine Erfassung der mindestens einen Zustandsgröße, eine Erfassung der mindestens einen Zusatzgröße sowie eine Erfassung der Maßnahmen zur Veränderung des thermischen Komfortzustands des Nutzers 2. So können unter anderem die vorhergehend erläuterten manuellen Änderungen der Steuergrößen erfasst werden. Weiter können beispielsweise weiterhin eine Intensität der Sonnenstrahlung, eine Luftfeuchte im Fahrzeuginnenraum und ein Bekleidungszustand des Nutzers 2 erfasst werden.

In einem vierten Schritt S4 wird dann ein nutzerspezifisches Steuerprofil in Abhängigkeit der erfassten Daten derart erzeugt, dass ein gewünschter thermischer Komfortzustand KZ (siehe Fig. 5) möglichst schnell erreicht wird.

Dieses Steuerprofil kann dann für den Nutzer 2 bei zeitlich nachfolgenden Steuerverfahren verwendet werden. Das Steuerprofil kann selbstverständlich dem anfangs bestimmten Zustandsprofil zugeordnet werden.

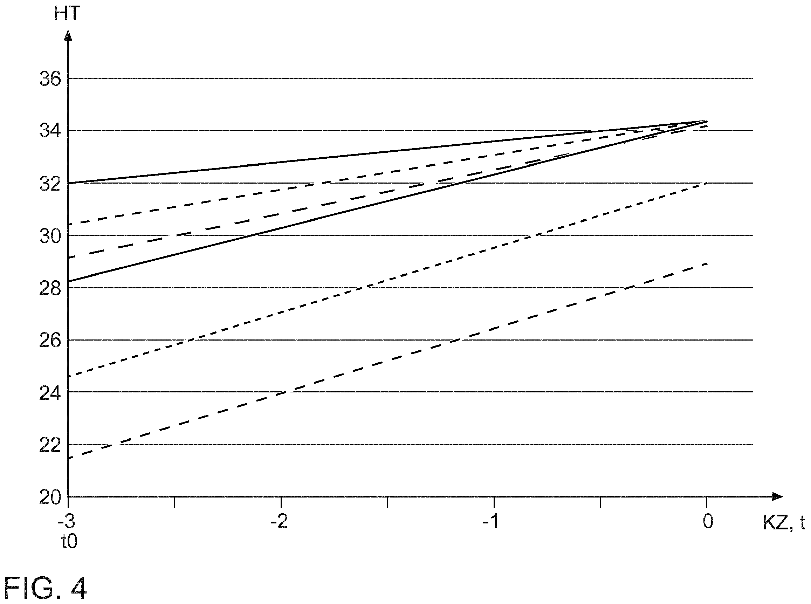

In Fig. 4 ist exemplarischer Zusammenhang zwischen einer Hauttemperatur HT und verschiedenen Komfortzuständen KZ über der Zeit t dargestellt. Die Komfortzustände KZ sind hierbei in Form von Komfortindizes kodiert. Ein Index von -3 entspricht einem subjektiven Komfortempfinden "zu kalt". Ein Komfortindex von -2 entspricht einem subjektiven Komfortempfinden von "kalt". Ein Komfortindex von -1 entspricht einem subjektiven Komfortempfinden von "kühl". Ein Komfortindex von 0 entspricht einem subjektiven Komfortempfinden von "neutral". Hierbei bildet der Komfortindex von 0 einen Ziel-Komfortindex und somit einen Ziel-Komfortzustand.

Hierbei ist aus Fig. 4 ersichtlich, dass dem Ziel-Komfortzustand abhängig von einer Anfangs-Hauttemperatur verschiedene Zieltemperaturen zugeordnet sein können. Die Anfangs-Hauttemperatur bezeichnet hierbei eine Hauttemperatur zu einem Anfangszeitpunkt t0.

Liegt zum Anfangszeitpunkt t0 die Hauttemperatur HT über einer vorbestimmten Temperatur, insbesondere über 28,3° C, so ist die Zieltemperatur des Ziel-Komfortzustandes gleich einer vorbestimmten ersten Zieltemperatur, insbesondere 34,3° C. Liegt die Anfangs-Hauttemperatur HT zum Anfangszeitpunkt t0 jedoch unterhalb von. 28,3° C, so liegt die für jede Anfangs-Hauttemperatur verschiedene Zieltemperatur des Ziel-Komfortzustandes jeweils unterhalb der ersten Zieltemperatur.

Hierbei ist jeder Anfangs-Haupttemperatur, die größer als die oder gleich der vorbestimmte(n) Temperatur ist, die erste Zieltemperatur zugeordnet. Weiter ist jeder Anfangs-Hauttemperatur, die kleiner als die vorbestimmte Temperatur ist, jeweils eine von verschiedenen Zieltemperaturen zugeordnet, wobei alle diese Zieltemperaturen kleiner als die erste Zieltemperatur ist.

Dies bedeutet, dass ein Nutzer 2 (siehe Fig. 2) den gleichen Komfortzustand KZ bei verschiedenen Hauttemperaturen HT erreichen kann, wobei die jeweilige Hauttemperatur HT abhängig von Anfangs-Hauttemperatur ist. Hierbei ist möglich, in Vorversuchen einen Zusammenhang zwischen Anfangs-Hauttemperatur und Ziel-Hauttemperatur zu ermitteln und für eine nachfolgende Steuerung zu verwenden.

In Fig. 5 ist ein exemplarischer Zusammenhang zwischen einem zeitlichen Verlauf einer Wärmezufuhr WZ und Komfortzuständen KZ eines Nutzers 2 über der Zeit t für verschiedene Szenarien dargestellt. Ein erstes Komfortzustandsszenario KZS1 entspricht einem Szenario, in dem ein Nutzer 2 vor einem Anfangszeitpunkt t0, beispielsweise einem Einstiegszeitpunkt in ein Fahrzeug 3 (siehe Fig. 1), sich für längere Zeit in einer zu kalten Umgebung befunden hat. Dies ist durch einen Komfortzustand KZ von -3 dargestellt. Ein zweites Komfortzustandsszenario KZS2 bezeichnet ein Szenario, bei dem sich der Nutzer 2 vor dem Anfangszeitpunkt nur für kurze Zeit in einer zu kalten Umgebung befunden hat. In Fig. 5 ist dargestellt, dass für die verschiedenen Komfortzustandsszenarien KZS1, KZS2 verschiedene Wärmezufuhrprofile verwendet werden müssen, um den Komfortzustand KZ für den Nutzer 2 nach Einstieg in das Fahrzeug 3 in gleichem Maße auf den Ziel-Komfortzustand 0 zu verändern. So ist im ersten Komfortzustandsszenario eine wesentlich höhere Wärmezufuhr als im zweiten Komfortzustandsszenario KZS2 notwendig. Die Wärmezufuhr WZ kann über Flächengrenzen des Nutzers 2 erfolgen, beispielsweise über Strahlung, Konvektion oder thermischen Kontakt, insbesondere durch die in Fig. 1 dargestellte Klimaanlage 7, Belüftungsanlage 8 und Infrarot-Strahleinrichtung 9. Selbstverständlich kann auch noch eine Heizanlage, beispielsweise eine Sitzheizung zur Wärmezufuhr verwendet werden.

Insbesondere kann gelten, dass bei einer Hauttemperatur HT, die kleiner als die vorbestimmte Zieltemperatur ist, darauf geschlossen werden kann, dass dem Nutzer 2 zu kühl ist, wobei bei einer Hauttemperatur HT, die größer als die oder gleich der vorbestimmten Zieltemperatur ist, darauf geschlossen werden kann, dass dem Nutzer 2 nicht zu kühl ist.

Weiter kann gelten, dass bei einer Hautfeuchte, die kleiner als eine oder gleich einer vorbestimmten Zielfeuchte ist, darauf geschlossen werden kann, dass dem Nutzer 2 nicht zu warm ist, wobei bei einer Hautfeuchte, die größer als die vorbestimmte Zielfeuchte ist, darauf geschlossen werden kann, dass dem Nutzer 2 zu warm ist.

### Bezugszeichenliste

- 1: Vorrichtung
- 2: Nutzer
- 3: Fahrzeug
- 4: Einrichtung zur Erfassung
- 5: Kommunikationseinrichtung
- 6: Steuereinrichtung
- 7: Klimaanlage
- 8: Belüftungsanlage
- 9: Infrarot-Strahleinrichtung
- S1: erster Schritt
- S2: zweiter Schritt
- S3: dritter Schritt
- S4: vierter Schritt
- S5: fünfter Schritt
- t0: Anfangszeitpunkt
- t: Zeit
- KZ: Komfortzustand
- c: Zeit
- HT: Hauttemperatur

## Patentansprüche

1. Verfahren zur Einstellung eines thermischen Komfortzustands (KZ) mindestens eines Nutzers (2) eines Fahrzeugs (3), wobei zu einem Anfangszeitpunkt (t0) mindestens eine Ist-Zustandsgröße des Nutzers (2) durch mindestens eine Einrichtung (4) zur Erfassung der mindestens einen Zustandsgröße erfasst wird, wobei die Ist-Zustandsgröße eine Hauttemperatur und/oder eine Hautfeuchte des Nutzers (2) ist, wobei die mindestens eine Zustandsgröße von einer vom Nutzer (2) getragenen Einrichtung (4) zur Erfassung der mindestens einen Zustandsgröße erfasst wird, wobei mindestens eine fahrzeugseitige Einrichtung zur Veränderung der Zustandsgröße derart gesteuert wird, dass eine Abweichung der Ist-Zustandsgröße von einer Ziel-Zustandsgröße minimiert wird, wobei die Steuerung der fahrzeugseitigen Einrichtung zur Veränderung der Zustandsgröße erfolgt, wenn der Ziel-Komfortzustand vom Anfangs-Komfortzustand abweicht, wobei
in Abhängigkeit der mindestens einen Ist-Zustandsgröße ein Anfangs-Komfortzustand des Nutzers (2) bestimmt wird, wobei ein Ziel-Komfortzustand bestimmt wird,
**dadurch gekennzeichnet, dass**
der Anfangs-Komfortzustand und der Ziel-Komfortzustand in Form eines PMV-Index bestimmt wird, wobei die mindestens eine Ziel-Zustandsgröße in Abhängigkeit des Ziel-Komfortzustands durch Nutzung einer vorbekannten Zuordnung zwischen Komfortzustand und mindestens einer Zustandsgröße bestimmt wird.

2. Verfahren nach Anspruch 1, **dadurch gekennzeichnet, dass** die Einrichtung (4) zur Erfassung der mindestens einen Zustandsgröße in Kontakt mit der Haut des Nutzers (2) steht.

3. Verfahren nach Anspruch 1 oder 2, **dadurch gekennzeichnet, dass** die Einrichtung (4) zur Erfassung der mindestens einen Zustandsgröße als Uhr ausgebildet oder in eine Uhr integriert ist.

4. Verfahren nach einem der Ansprüche 1 bis 3, **dadurch gekennzeichnet, dass** die mindestens eine Ziel-Zustandsgröße in Abhängigkeit von der mindestens einen Anfangs-Zustandsgröße bestimmt wird.

5. Verfahren nach einem der Ansprüche 1 bis 4, **dadurch gekennzeichnet, dass** die mindestens eine Zustandsgröße zusätzlich zeitlich vor dem Anfangszeitpunkt (t0) erfasst wird, wobei die mindestens eine Einrichtung zur Veränderung der Zustandsgröße zusätzlich in Abhängigkeit der zeitlich vor dem Anfangszeitpunkt erfassten Zustandsgröße gesteuert wird.

6. Verfahren nach einem der Ansprüche 1 bis 5, **dadurch gekennzeichnet, dass** zusätzlich zu der mindestens einen Zustandsgröße zumindest eine Zusatzgröße bestimmt wird, wobei die mindestens eine Einrichtung zur Veränderung der Zustandsgröße in Abhängigkeit der erfassten Zusatzgröße gesteuert wird.

7. Verfahren nach einem der Ansprüche 1 bis 6, **dadurch gekennzeichnet, dass** einer Anzahl von Zustandsprofilen jeweils ein Steuerprofil zur Steuerung der mindestens einen Einrichtung zur Veränderung der Zustandsgröße zugeordnet ist, wobei die Zuordnung des Zustandsprofils zu dem jeweiligen Steuerprofil vorbekannt ist, wobei zum Anfangszeitpunkt (t0) das Steuerprofil zur Steuerung der mindestens einen Einrichtung zur Veränderung der Zustandsgröße gewählt wird, dessen Zustandsprofil eine minimale Abweichung von dem zum Anfangszeitpunkt (t0) vorliegenden Zustandsprofil aufweist.

8. Verfahren nach einem der Ansprüche 1 bis 7, **dadurch gekennzeichnet, dass** ein Zustandsprofil zum Anfangszeitpunkt (t0) bestimmt wird, wobei weiter ein zeitlicher Verlauf der mindestens einen Zustandsgröße nach dem Anfangszeitpunkt (t0) erfasst wird, wobei in Abhängigkeit des zeitlichen Verlaufs ein Steuerprofil zur Steuerung der mindestens einen Einrichtung zur Veränderung der Zustandsgröße bestimmt und dem Zustandsprofil zugeordnet wird.

9. Verfahren nach einem der Ansprüche 7 oder 8, **dadurch gekennzeichnet, dass** die Steuerprofile einem Nutzer (2) zugeordnet werden/sind.

10. Verfahren nach einem der Ansprüche 7 bis 9, **dadurch gekennzeichnet, dass** die Steuerprofile in mindestens einer Speichereinrichtung des Fahrzeugs (3) oder in mindestens einer Speichereinrichtung der Einrichtung (4) zur Erfassung der mindestens einen Zustandsgröße gespeichert sind.

11. Verfahren nach einem der Ansprüche 1 bis 10, **dadurch gekennzeichnet, dass** in Abhängigkeit der Abweichung der Ist-Zustandsgröße von der Ziel-Zustandsgröße ein Energieverbrauch zum Erreichen der Ziel-Zustandsgröße bestimmt wird.

12. Verfahren nach einem der Ansprüche 1 bis 11, **dadurch gekennzeichnet, dass** als Zustandsgrößen zumindest eine Hauttemperatur (HT) und eine Hautfeuchte bestimmt werden.

13. Vorrichtung zur Einstellung eines thermischen Komfortzustands (KZ) mindestens eines Nutzers (2) eines Fahrzeugs (3), wobei die Vorrichtung (1) mindestens eine Einrichtung (4) zur Erfassung mindestens einer Zustandsgröße und mindestens eine Auswerteeinrichtung umfasst, wobei zu einem Anfangszeitpunkt (t0) mindestens eine Ist-Zustandsgröße des Nutzers (2) durch eine Einrichtung (4) zur Erfassung der mindestens einen Zustandsgröße erfassbar ist, wobei die Ist-Zustandsgröße eine Hauttemperatur und/oder eine Hautfeuchte des Nutzers (2) ist, wobei die Einrichtung zur Erfassung (4) der mindestens einen Zustandsgröße als eine vom Nutzer (2) tragbare Einrichtung ausgebildet ist, wobei mindestens eine fahrzeugseitige Einrichtung zur Veränderung der Zustandsgröße derart steuerbar ist, dass eine Abweichung der Ist-Zustandsgröße von einer Ziel-Zustandsgröße minimiert wird, wobei durch die Auswerteeinrichtung in Abhängigkeit der mindestens einen Ist-Zustandsgröße ein Anfangs-Komfortzustand des Nutzers (2) bestimmbar ist, wobei ein Ziel-Komfortzustand bestimmbar ist, wobei die Steuerung der fahrzeugseitigen Einrichtung zur Veränderung der Zustandsgröße erfolgt, wenn der Ziel-Komfortzustand vom Anfangs-Komfortzustand abweicht,
**dadurch gekennzeichnet, dass**
der Anfangs-Komfortzustand und der Ziel-Komfortzustand in Form eines PMV-Index bestimmbar ist, wobei die mindestens eine Ziel-Zustandsgröße in Abhängigkeit des Ziel-Komfortzustands durch Nutzung einer vorbekannten Zuordnung zwischen Komfortzustand und mindestens einer Zustandsgröße bestimmbar ist.

## Claims

1. Method for setting a thermal comfort state (KZ) of at least one user (2) of a vehicle (3), wherein, at a start time (t0), at least one actual state variable of the user (2) is detected by at least one device (4) for detecting the at least one state variable,
wherein the actual state variable is a skin temperature and/or a skin moistness of the user (2), wherein the at least one state variable is detected by a device (4), worn by the user (2), for detecting the at least one state variable, wherein at least one vehicle-mounted device for changing the state variable is controlled in such a way that a deviation of the actual state variable from a target state variable is minimized, wherein the control of the vehicle-mounted device for changing the state variable takes place when the target comfort state deviates from the starting comfort state, wherein
a starting comfort state of the user (2) is determined as a function of the at least one actual state variable, wherein a target comfort state is determined,
**characterized in that**
the starting comfort state and the target comfort state are determined in the form of a PMV index, wherein the at least one target state variable is determined as a function of the target comfort state by utilizing an already known association between the comfort state and at least one state variable.

2. Method according to claim 1, **characterized in that** the device (4) for detecting the at least one state variable is in contact with the skin of the user (2).

3. Method according to claim 1 or 2, **characterized in that** the device (4) for detecting the at least one state variable is designed as a timepiece or is integrated into a timepiece.

4. Method according to one of claims 1 through 3, **characterized in that** the at least one target state variable is determined as a function of the at least one starting state variable.

5. Method according to one of claims 1 through 4, **characterized in that** the at least one state variable is additionally detected at a time prior to the start time (t0), wherein the at least one device for changing the state variable is additionally controlled as a function of the state variable detected at a time prior to the start time.

6. Method according to one of claims 1 through 5, **characterized in that**, in addition to the at least one state variable, at least one auxiliary variable is determined, wherein the at least one device for changing the state variable is controlled as a function of the detected auxiliary variable.

7. Method according to one of claims 1 through 6, **characterized in that** a control profile for controlling the at least one device for changing the state variable is associated with a number of state profiles in each case, wherein the association of the state profile with the respective the control profile is already known, wherein, at the start time (t0), the control profile for controlling the at least one device for changing the state variable is selected, the state profile of which has a minimum deviation from the state profile present at the start time (t0).

8. Method according to one of claims 1 through 7, **characterized in that** a state profile is determined at the start time (t0), wherein, further, a temporal profile of the at least one state variable is detected after the start time (t0), wherein a control profile for controlling the at least one device for changing the state profile is determined as a function of the temporal profile and associated with the state profile.

9. Method according to one of claims 7 or 8, **characterized in that** the control profiles will be/are associated with a user (2).

10. Method according to one of claims 7 through 9, **characterized in that** the control profiles are stored in at least one memory device of the vehicle (3) or in at least one memory device of the device (4) for detecting the at least one state variable.

11. Method according to one of claims 1 through 10, **characterized in that** an energy consumption for achieving the target state variable is determined as a function of the deviation of the actual state variable from the target state variable.

12. Method according to one of claims 1 through 11, **characterized in that** at least a skin temperature (HT) and a skin moistness are determined as state variables.

13. Apparatus for setting a thermal comfort state (KZ) of at least one user (2) of a vehicle (3), wherein the apparatus (1) comprises at least one device (4) for detecting at least one state variable and at least one evaluation device, wherein, at a start time (t0), at least one actual state variable of the user (2) can be detected by a device (4) for detecting the at least one state variable, wherein the actual state variable is a skin temperature and/or a skin moistness of the user (2), wherein the device for detecting (4) the at least one state variable is designed as a device that can be worn by the user (2), wherein at least one vehicle-mounted device for changing the state variable can be controlled in such a way that a deviation of the actual state variable from a target state variable is minimized, wherein a starting comfort state of the user (2) can be determined by the evaluation device as a function of the at least one actual state variable, wherein a target comfort state can be determined, wherein the control of the vehicle-mounted device for changing the state variable takes place when the target comfort state deviates from the starting comfort state,
**characterized in that**
the starting comfort state and the target comfort state can be determined in the form of a PMV index, wherein the at least one target state variable can be determined as a function of the target comfort state by utilizing an already known association between the comfort state and at least one state variable.

## Revendications

1. Procédé de réglage d'un état de confort thermique (KZ) d'au moins un utilisateur (2) d'un véhicule (3), dans lequel au moins une grandeur d'état réelle de l'utilisateur (2) est détectée à un instant initial (t0) par au moins un dispositif (4) de détection d'au moins une grandeur d'état, dans lequel la grandeur d'état réelle est une température de la peau et/ou une humidité de la peau de l'utilisateur (2), dans lequel la au moins une grandeur d'état est détectée par un dispositif (4) porté par l'utilisateur (2) de détection d'au moins une grandeur d'état, dans lequel au moins un dispositif côté véhicule destiné à la modification de la grandeur d'état est commandé de sorte qu'un écart de la grandeur d'état réelle par rapport à une grandeur d'état cible soit réduit au minimum, dans lequel la commande du dispositif côté véhicule destiné à la modification de la grandeur d'état est effectuée lorsque l'état de confort cible s'écarte de l'état de confort initial, dans lequel
un état de confort initial de l'utilisateur (2) est déterminé en fonction de la au moins une grandeur d'état réelle, dans lequel un état de confort cible est déterminé,
**caractérisé en ce que**
l'état de confort initial et l'état de confort cible sont déterminés sous la forme d'un indice PMV, dans lequel la au moins une grandeur d'état cible est déterminée en fonction de l'état de confort cible par l'utilisation d'une association connue au préalable entre l'état de confort et au moins une grandeur d'état.

2. Procédé selon la revendication 1, **caractérisé en ce que** le dispositif (4) destiné à détecter la au moins une grandeur d'état est en contact avec la peau de l'utilisateur (2).

3. Procédé selon la revendication 1 ou 2, **caractérisé en ce que** le dispositif (4) destiné à détecter la au moins une grandeur d'état est conçu comme une horloge ou est intégré dans une horloge.

4. Procédé selon l'une quelconque des revendications 1 à 3, **caractérisé en ce que** la au moins une grandeur d'état cible est déterminée en fonction de la au moins une grandeur d'état initiale.

5. Procédé selon l'une quelconque des revendications 1 à 4, **caractérisé en ce que** la au moins une grandeur d'état est détectée en outre temporellement avant l'instant initial (t0), dans lequel le au moins un dispositif destiné à la modification de la grandeur d'état est commandé en outre en fonction de la grandeur d'état détectée temporellement avant l'instant initial.

6. Procédé selon l'une quelconque des revendications 1 à 5, **caractérisé en ce que,** outre la au moins une grandeur d'état, au moins une grandeur supplémentaire est déterminée, dans lequel le au moins un dispositif destiné à la modification de la grandeur d'état est commandé en fonction de la grandeur supplémentaire détectée.

7. Procédé selon l'une quelconque des revendications 1 à 6, **caractérisé en ce qu'**un profil de commande pour la commande du au moins un dispositif destiné à la modification de la grandeur d'état est associé respectivement à un certain nombre de profils d'état, dans lequel l'association du profil d'état au profil de commande respectif est connue au préalable, dans lequel à l'instant initial (t0), le profil de commande pour la commande du au moins un dispositif destiné à la modification de la grandeur d'état est sélectionné, dont le profil d'état présente un écart minimum par rapport au profil d'état présent à l'instant initial (t0).

8. Procédé selon l'une quelconque des revendications 1 à 7, **caractérisé en ce qu'**un profil d'état est déterminé à l'instant initial (t0), dans lequel, en outre, un déroulement chronologique de la au moins une grandeur d'état est détecté après l'instant initial (t0), dans lequel, en fonction du déroulement chronologique, un profil de commande pour la commande du au moins un dispositif destiné à la modification de la grandeur d'état est déterminé et associé au profil d'état.

9. Procédé selon l'une quelconque des revendications 7 ou 8, **caractérisé en ce que** les profils de commande sont attribués à un utilisateur (2).

10. Procédé selon l'une quelconque des revendications 7 à 9, **caractérisé en ce que** les profils de commande sont mémorisés dans au moins un dispositif de mémoire du véhicule (3) ou dans au moins un dispositif de mémoire du dispositif (4) destiné à la détection de la au moins une grandeur d'état.

11. Procédé selon l'une quelconque des revendications 1 à 10, **caractérisé en ce que,** en fonction de l'écart de la grandeur d'état réelle par rapport à la grandeur d'état cible, une consommation d'énergie pour atteindre la grandeur d'état cible est déterminée.

12. Procédé selon l'une quelconque des revendications 1 à 11, **caractérisé en ce que,** en guise de grandeurs d'état, au moins une température de la peau (HT) et une humidité de la peau sont déterminées.

13. Dispositif de réglage d'un état de confort thermique (KZ) d'au moins un utilisateur (2) d'un véhicule (3), dans lequel le dispositif (1) comprend au moins un dispositif (4) de détection d'au moins une grandeur d'état et au moins un dispositif d'évaluation, dans lequel, à un instant initial (t0), au moins une grandeur d'état réelle de l'utilisateur (2) peut être déterminée par un dispositif (4) de détection de la au moins une grandeur d'état, dans lequel la grandeur d'état réelle est une température de la peau et/ou une humidité de la peau de l'utilisateur (2), dans lequel le dispositif de détection (4) de la au moins une grandeur d'état est conçu comme un dispositif pouvant être porté par l'utilisateur (2), dans lequel au moins un dispositif côté véhicule, destiné à la modification de la grandeur d'état, peut être commandé de sorte qu'un écart de la grandeur d'état réelle par rapport à une grandeur d'état cible soit réduit au minimum, dans lequel un état de confort initial de l'utilisateur (2) peut être déterminé par le dispositif d'évaluation en fonction de la au moins une grandeur d'état réelle, dans lequel un état de confort cible peut être déterminé, dans lequel la commande du dispositif côté véhicule destiné à la modification de la grandeur d'état est effectuée lorsque l'état de confort cible s'écarte de l'état de confort initial,
**caractérisé en ce que**
l'état de confort initial et l'état de confort cible peuvent être déterminés sous la forme d'un indice PMV, dans lequel la au moins une grandeur d'état cible peut être déterminée en fonction de l'état de confort cible par l'utilisation d'une association connue au préalable entre l'état de confort et au moins une grandeur d'état.
